# EUROPEAN PATENT SPECIFICATION

(11) **EP 0 269 166 B1**
(45) Date of publication and mention of the grant of the patent: **04.05.1994**
(21) Application number: 87202186.0
(22) Date of filing: 10.11.1987
(51) Int. Cl.: A01D 34/66, A01D 67/00, A01B 59/042

(54) **A mowing machine**
Mähmaschine
Faucheuse

(30) Priority: 12.11.1986 NL 8602866
(43) Date of publication of application: 01.06.1988
(73) Proprietor: C. van der Lely N.V., NL-3155 PD Maasland (NL)
(72) Inventor: Louet, Feisser, Arnold, Riel (NL); Koorn, Maarten, Vlaardingen (NL); Sikkema, Sape, Maassluis (NL)
(74) Representative: Mulder, Herman

(56) References cited:
- EP-A- 0 111 760
- DE-U- 8 125 294
- FR-A- 788 790
- GB-A- 1 583 983
- GB-A- 2 053 645
- GB-A- 2 171 884
- US-A- 1 878 346

## Description

The invention relates to a mowing machine including a mobile frame, which is couplable by means of a pivotal arm to a drawing vehicle and, during operation, is located behind and sidewards of said vehicle, the pivotal arm being provided with a first section couplable to the vehicle, a second section connected to the mobile frame and drive means for driving the mowing machine from said vehicle, said drive means including universal joints.

Such a mowing machine is known from GB-A-2053645; the pivotal arm of the mowing machine in this document is designed to be hitched to the drawbar or drawbar extension of a towing vehicle in a conventional manner. The consequence of this construction is that there are serious limitations in making sharp curves during mowing, while the length of the drive shaft of the drive means for driving the mowing machine has to be greatly adapted in length when curves are made by the towing vehicle with the mowing machine. The purpose of the invention is to limit these objections. Therefore, in accordance with the invention, the mowing machine as described in the opening paragraph is characterized in that the pivotal arm comprises two portions, each of which being connected with a respective pivotal arm section, and two mutually diagonal connecting members, which by means of pivotable connections are each connected at both ends to said portions, a vertical plane through the pivotable connections on the portion connected to the first section being perpendicular to the direction of operative travel, a vertical plane through the pivotable connection on the portion connected to the second section being perpendicular to the length direction of said second section when seen from above and in that each of the universal joints is provided substantially between respective pivotable connections of the connecting members to a respective portion.

A connection of a drawn vehicle to a drawing vehicle by means of mutually diagonal connecting members is known per se from US-A-1,878,346. In this document it is shown that the mutually diagonal connecting members are each connected at both ends to specific portions by means of pivotable connections, wherein one of these portions is connected to a draw bar and the other is formed by a beam of the drawn vehicle. However, the connecting members do not form part of a pivotal arm by means of which a drawn vehicle can be brought sidewards of a drawing vehicle, are not mounted between two pivotal arm sections, while there are no drive means from the drawing vehicle to the drawn vehicle.

In a specific embodiment of the mowing machine the mutually diagonal connecting members have a substantially equal length, the pivotable connections are formed by hinges having substantially vertical pins, while the distance between the pivotable connections on the portion connected to the first section of the pivotal arm is equal to the distance between the pivotable connections on the portion connected to the second section of the pivotable arm. Particularly, the mowing machine is characterized in that each of the universal joints is provided near the centre of a connection line between the respective pivotable connections of the connecting members to a respective portion.

The use of the above-described construction achieves that the apparent pivotal point between the drawing vehicle and the pivotal arm to the mowing machine is located at some distance behind the drawing vehicle, which is advantageous when a curve is to be taken during mowing, while furthermore the two universal joints each account for approximately half of the angle between the drawing vehicle and the pivotal arm, so that the drive can also be effected at a comparatively wide angle. It is furthermore achieved that, during pivoting of the pivotal arm relative to the drawing vehicle, the length of the drive shaft hardly need be adapted.

For a better understanding of the invention and to show how the same may be carried into effect, reference will now be made, by way of example, to the accompanying drawings of some embodiments of the mowing implement, in which:
Figure 1 is a side view of a mowing machine;
Figure 2 is a plan view of the mowing machine of Figure 1;
Figure 3 is a rear view of the mowing machine of Figure 1;
Figure 4 illustrates the drive of a mowing machine;
Figures 5 and 6 illustrate a second embodiment of the connection between a mowing machine and a vehicle moving the machine;
Figure 7 is a side view of the embodiment shown in Figure 5.

In the various drawings, which give only a schematic rendering of the implement, corresponding component parts have been given the same reference numerals.

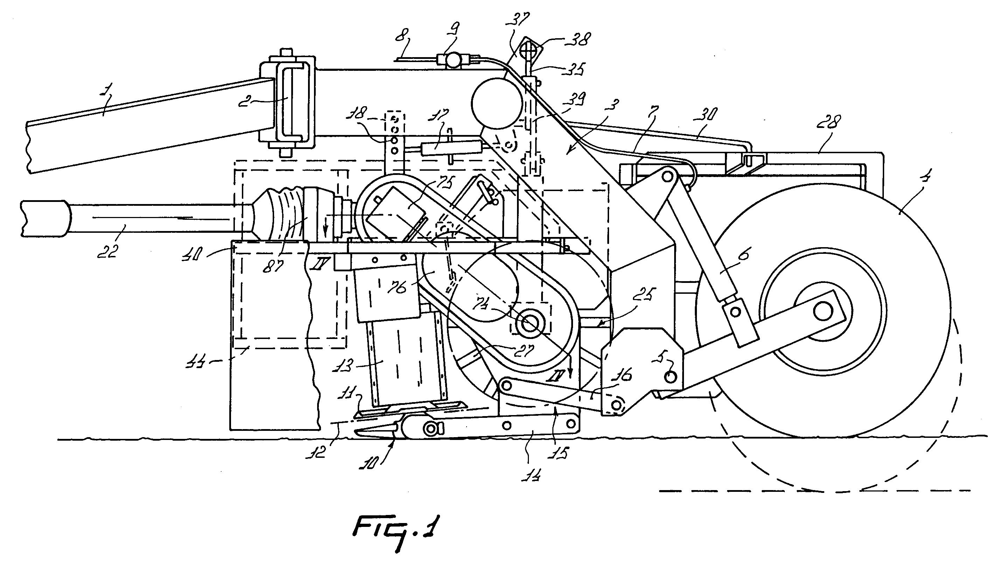

Figure 1 is a side view of a mowing machine, which mowing machine is provided with a pivotal arm 1, by means of which the mowing machine can be connected to a tractor or to a suchlike vehicle. Via hinge 2, the pivotal arm 1 is connected to the second frame 3 which is supported, capable of movement, by means of wheels 4 which by means of pivots 5 are pivotally connected to said second frame 3. The pivotal movement of each of the wheels 4 relative to the second frame 3 is effected by means of the hydraulic cylinder 6, whose length can be adjusted by means of the supply and discharge of a fluid through line 7. The hydraulic fluid is supplied from the vehicle drawing the machine via line 8, whereafter it passes through a flow divider 9 which provides each of the hydraulic cylinders 6 with equal quantities of fluid, so that the wheels 4 are pivoted to an equal extent relative to the second frame 3. This is in particular of importance when the vehicle drawing the mowing machine is not situated straight in front thereof, thus causing the weight distribution of the mowing machine over the two wheels 4 to be non-uniform.

The embodiment shown in Figures 1, 2 and 3 is furthermore provided with a supporting beam 10 cum mower members 11. The mower members 11 are disc-shaped having at their outer periphery knives 12 and are capable of rotation about upwardly directed axes. The drive of the mower members 11 is located in the supporting beam 10. The two outermost mower members are provided with drum-shaped crop guides 13, which rotate along with the mower member.

The supporting beam 10 is connected via arms 14 to the first frame 15. Said first frame 15, in which are mounted both the mowing unit and the crop processing implement 25 (to be described in the following), is movably connected to the second frame 3 by means of two lower pivotal members 16 and one upper pivotal member 17. Said pivotal members 16, 17 are mounted pivotally on both the first frame 15 and the second frame 3. Said lower pivotal members 16 extend from the second frame 3 obliquely upwardly and forwardly to the first frame 15. As a result thereof, the relative movement of the first frame 15 with respect to the second frame 3 will be such that at least the lower portion of the first frame 15, when it moves upwardly, will also move to the rear relative to the second frame 3. The upper pivotal member 17 is adjustable in length and can be secured to the first frame 15 by means of a plurality of attaching points 18 located one above the other. By changing the length of the upper pivotal member 17 it is possible to change the position of the first frame 15 relative to the second frame 3, and by connecting the upper pivotal member 17 to a higher or lower attaching point 18 on the first frame 15 it is possible to change the relative movement of the two frames 3, 15 to some extent.

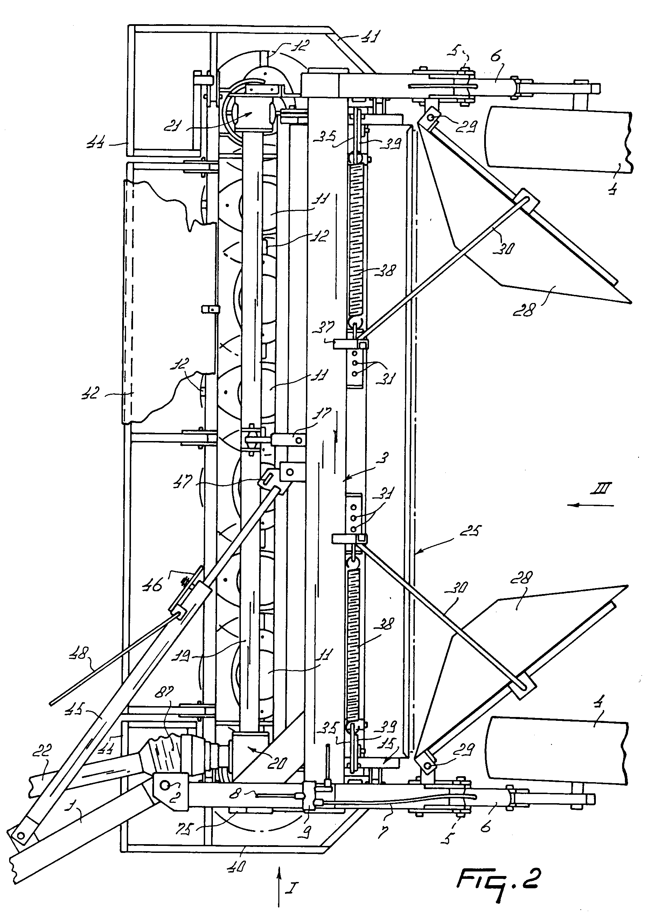

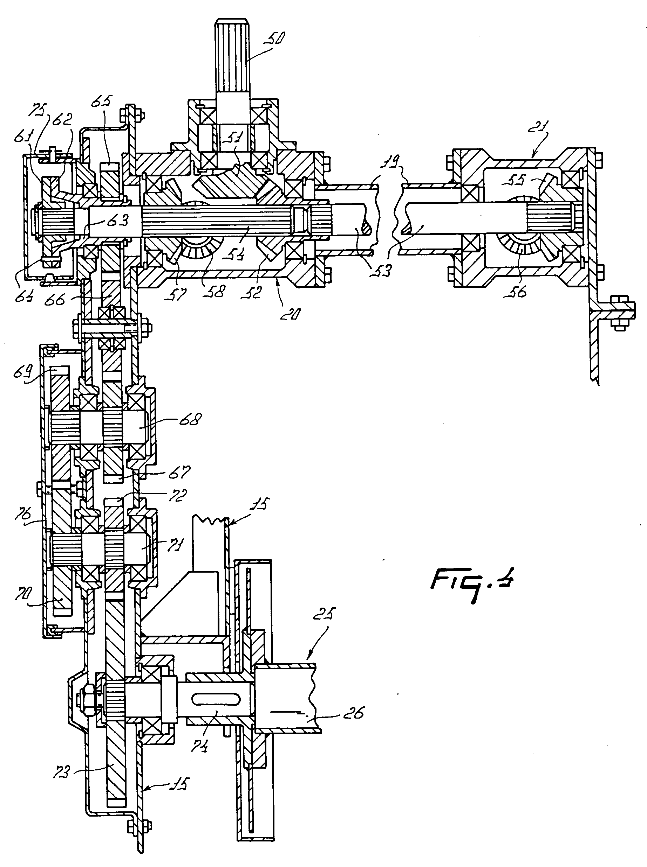

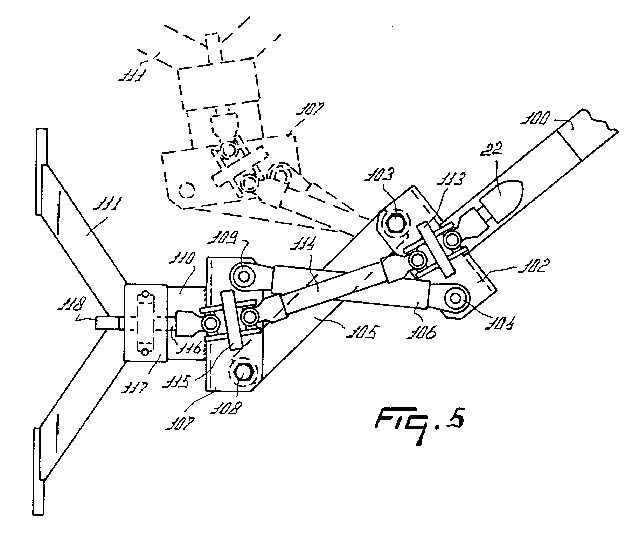

The first frame 15 includes, located within the hollow pipe 19 (Figure 2), the main drive shaft 53 (Figure 4) which is provided near its one end with the gear box 20 and near its other end with the gear box 21. Inside the gear box 20, the drive shaft 22 coming from the drawing vehicle is connected to the main drive shaft located in the hollow pipe 19. The drive will be described in further detail hereinafter with reference to Figure 4.

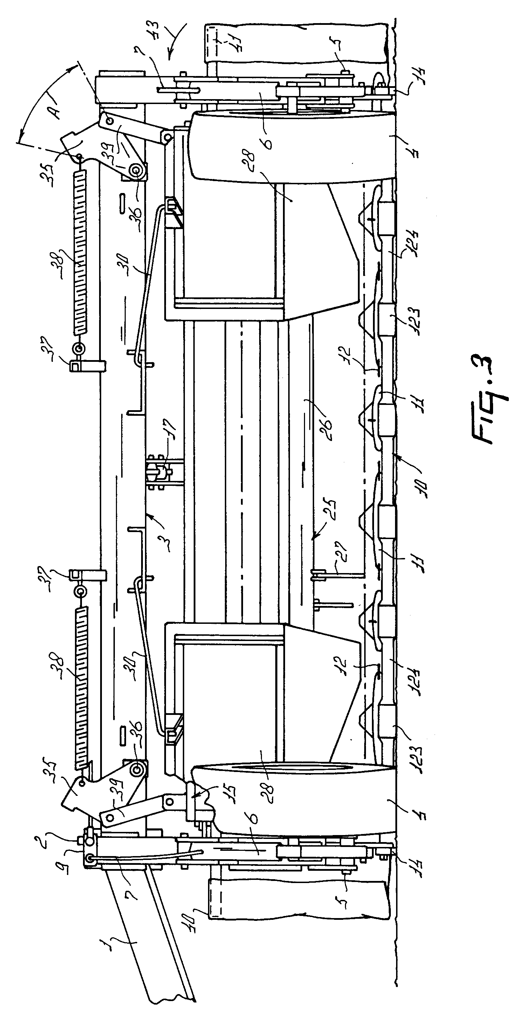

The crop processing member 25 accommodated in the first frame 15 substantially consists of a horizontally extending tube 26, to which beater members 27 are fitted. Figure 3 shows only a few of said beater members 27. The tube 26 cum beater members 27 is capable of rotation about its longitudinal axis, i.e. in such a manner that the front side thereof moves upwardly. As a result, the crop mown by the mowing unit is gripped by said beater members 27 which discharge the crop upwardly and rearwardly, whereby an advantageous processing of the crop is performed by the said beater members 27.

In order to collect the crop moved rearwardly by the crop processing member 25 into a swath having a smaller width than that of the mowing machine, two swath boards 28 are provided in the second frame 3. The swath boards 28 are mounted pivotally about vertical pins 29 (Figure 2) in the second frame 3. The angle between the swath board 28 and the second frame 3 can be set by connecting the rod 30 in different places to the second frame 3. A plurality of apertures 31 have been provided for the purpose.

As is apparent from Figures 2 and 3, the swath boards 28 are provided with a substantially vertical portion and an obliquely downwardly and forwardly curved portion, whereby the crop discharged to the rear by the crop processing member 25 can be guided in an optimum manner to the swath to be formed.

The suspension of the first frame 15 in the second frame 3 will be described with reference to Figure 3. At the second frame 3, a tilting element 35 is pivotal on both sides about a shaft 36 which extends substantially horizontally and in the direction of operative travel of the machine. A tensile spring 38 compensating for the force exercised by a tensile member 39 on said tilting element 35 is arranged between the tilting element 35 and a support 37 mounted on the second frame 3. Tensile member 39, which has one end attached to the tilting element 35, has its other end pivotally connected to the first frame 15. Thus, the laterally directed force exercised by tensile spring 38 is converted into an upwardly directed force exercised on the first frame 15. The positions where the tensile spring 38 and the tensile member 39 act on the tilting element 35 are such that, when the tensile spring 38 is extended, whereby the force exercised by said spring increases, the upward force exercised on the first frame 15 does not increase proportionally. This is the result of the use of tilting element 35, which converts the force exercised by the tensile spring 38 into a torque and thereafter converts said torque into a tensile force in tensile member 39. Since on rotation of the tilting element 35 both arms of said torques change, also the force changes so as to keep the torques equal. The tilting element 35 is of such a construction that on extension of the tensile spring 38, whereby the tensile force increases, either the associated arms of the torque exercised thereby on the tilting element 35 decreases, or the arm of the torque by means of which the tilting element 35 exercises a force on the first frame 15 increases. In the embodiment shown in Figure 3 this is effected by the fact that the angle between the lines connecting the pivotal point 36 with the points of action of the tensile spring 38 and the tensile member 39, respectively, is less than 90° (indicated in Figure 3, right-hand side, by the letter A).

In addition, Figures 2 and 3 show that the two wheels 4 are slightly out-of-straight relative to the direction of operative travel of the mowing machine. This misalignment of the wheels 4 results in the mowing machine driving straight on when the vehicle drawing the machine is not straight in front of but obliquely in front of the mowing machine, i.e. in the embodiment shown to the left in front of the mowing machine.

The embodiment illustrated in Figures 1, 2 and 3 is furthermore provided with upwardly foldable screening hoods 40, 41 and 42. The screening hood 42 extends at the front side of the mowing machine, the screening hood 41 at the right-hand side and the screening hood 40 at the left-hand side of the mowing machine. The screening hoods are made of a metal frame covered with a plastic-coated cloth or any other type of flexible material, which material hangs loosely downwards all around. In order to increase the accessibility of the mowing unit, the screening hoods 40, 41 42 are foldable upwardly, i.e. about a substantially horizontal shaft located near the mowing machine. This upwardly folding movement is shown in Figure 3 at the right-hand side by means of arrow 43, while in Figure 1 the folded-up position is indicated by means of broken lines. As is apparent in particular from Figure 2, screening hood 42 at the front side of the implement is significantly less wide than the width of the mowing unit. In addition to the screening hood 42, at the front side of the mowing machine, a further screen is provided by the screening hoods 41 and 42 which, for that purpose, are extended inwardly at the front side. This extension, denoted in Figure 2 by reference numeral 44, is moved downwardly when the laterally extending portions of the screening hoods 40 and 41 are folded upwardly. This is of particular importance since at the left-hand side of the mowing machine, the portion 44 of the screening hood 40 is located directly below the drive shaft 27, so that an upwardly folding movement is impossible.

Figure 2 furthermore shows a hydraulic cylinder 45 which at its one end is pivotally connected to pivotal arm 1 and at its other end to the second frame 3. By controlling the length of the hydraulic cylinder 45, the pivotal angle of pivotal arm 1 relative to the mowing machine can be set. In the transport position, when the vehicle drawing the machine is approximately straight in front of the mowing machine, the cylinder 45 will be fully retracted, while the locking element 46, consisting of a spring-loaded, rotatable hook, falls into a recess 47 near the end of the piston rod of cylinder 45. Thus, the pivotal arm is blocked mechanically in the transport position. This blocking can be released by pulling the rope 48 from the vehicle drawing the machine, whereby the locking element 46 is removed from recess 47, whereafter by means of operating the hydraulic cylinder 45 the desired angular position of the pivotal arm can be adjusted.

The drive of the mowing machine shown in Figures 1, 2 and 3 will now be set out in further detail with reference to Figure 4. Figure 4 shows schematically an ingoing shaft 50 which is connected to the bevel gear wheel 51 in the gear box 20. The ingoing shaft 50 can be connected to the drive shaft 22 shown in the Figures 1 and 2. The bevel gear wheel 51 meshes with the bevel gear wheel 52, which is rigidly connected to the main drive shaft consisting of the sections 53 and 54. Section 53 of the main drive shaft 53, 54 reaches to into the gear box 21 and is therein rigidly connected to the bevel gear wheel 55, which meshes with the bevel gear wheel 56 connected to a drive shaft, the other end of which is connected to the outermost mower member 11 near one end of supporting beam 10. Consequently, said outermost mower member 11 is driven via the main drive shaft 53, 54. The other outermost mower member 11 (near the other end of supporting beam 10) is driven via the bevel gear wheel 57, which is secured to the section 54 of the drive shaft 53, 54 and meshes with the bevel gear wheel 58 of a drive shaft connected to said other outermost mower member 11. The two gear boxes 20 and 21 are interconnected by the hollow pipe 19 wherein section 53 of the main drive shaft is accommodated, said hollow pipe 19 constituting part of the first frame 15. It will be obvious that by rotation of the ingoing shaft 50 the two outermost mower members 11 are driven.

Section 54 of the main drive shaft 53, 54 extends sidewards to a further extent and at its end is provided with a rigidly connected flange 61, against which bears a flange 62 which is connected to a sleeve 63 provided coaxially about section 54 of the main drive shaft. The sleeve 63 is rotatable about section 54 of the main drive shaft, which rotation is blocked by a shear pin 64 which interconnects the two flanges 61, 62. The sleeve 63 is furthermore provided with a gear wheel 65, which meshes with a gear wheel 66 meshing in its turn with a gear wheel 67. The gear wheel 67 is connected to a shaft 68, on which a gear wheel 69 is mounted. The gear wheel 69 meshes with a gear wheel 70 mounted on a shaft 71. A gear wheel 72 is rigidly mounted on the shaft 71, which gear wheel 72 meshes with a gear wheel 73 which is rigidly mounted on a shaft 74 connected to the crop processing member 25, the tube 26 of which is shown in Figure 4.

It will be obvious that by rotating the ingoing shaft 50 not only the mowing unit but also the crop processing member 25 is driven, i.e. via the shear pin 64 and the set of gear wheels 69, 70. The shear pin 64 has for its object to provide protection against excessive forces on the drive, which forces can be produced both by blocking of ingoing shaft 50 or of the mowing unit on the one hand and by blocking of the crop processing member 25 on the other. Because of the relatively large mass inertia of both portions of the mowing machine, on blocking of either of said portions, the other portion will be disconnected therefrom by shearing of the shear pin. After shearing of the shear pin 64, it can be replaced by removing the cover 75 located at the side of the mowing machine and fitting a new shear pin.

At its side, the mowing machine is furthermore provided with the removable cover 76, behind which the set of gear wheels 69, 70 is located. After removal of the cover 76, both gear wheels can be removed from their respective shafts 68, 71 and be replaced by gear wheels having a different transmission ratio or be interchanged, thus changing the transmission ratio. Thus, it is possible to alter the transmission ratio between the ingoing shaft 50 and the crop processing member 25, as a result of which the number of revolutions of the crop processing member 25 can be adapted to the desired processing of the crop.

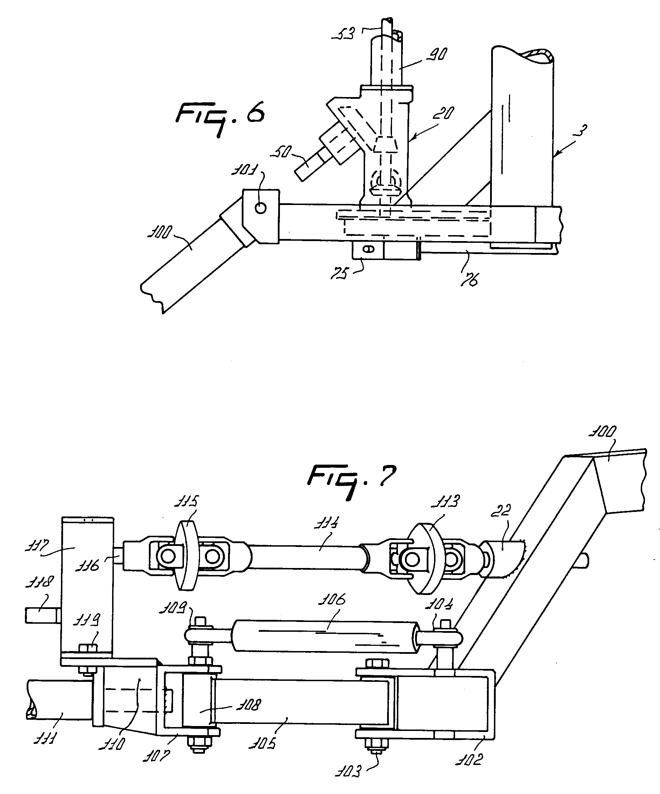

Figures 5, 6 and 7 illustrate the manner in which the mowing machine can be coupled to a vehicle drawing same. Figure 6 shows the manner in which the pivotal arm is connected to the mowing machine, the section 100 of the pivotal arm being connected pivotally about the shaft 101 to the second frame 3 of the mowing machine. Figure 6 shows the section 100 of the pivotal arm approximately in its operating position, said section 100 of the pivotal arm extending approximately parallel to the ingoing shaft 50 for driving the mowing machine. At the other end of the section 100 of the pivotal arm there is provided a portion or cross-beam 102 (Figure 5) having near each of its ends a pivotal connection 103 and 104, respectively, to connection members 105, 106, particularly to a connecting beam 105 and a connecting rod 106, respectively, which are both of approximately the same length. The other ends of the connecting members 105, 106 are connected pivotally to a portion or cross-beam 107, i.e. by means of pivotal connections 108 and 109 provided near the ends of the cross-beam 107, said cross-beam being rigidly connected by means of connecting elements 110 and 111 to the vehicle drawing the machine.

It will be obvious that the projections of the pivotal connections 103, 104, 108 and 109 on a horizontal plane form a deformable quadrangle, as is shown in Figure 5, whose two facing sides, corresponding to the portions or cross-beams 102 and 107, are equal and of constant length, while moreover the diagonals, corresponding to the connecting members, i.e. the connecting beam 105 and the connecting rod 106, are identical and of constant length. Broken lines in Figure 5 illustrate how the cross-beam 107 can move relative to the cross-beam 102 by deformation of said quadrangle. In this manner a pivotal connection is obtained between the drawing vehicle and the mowing machine, which connection has specific advantages, as will be set out in further detail hereinafter.

Figure 7 is a side view of what is shown in Figure 5. The connection of the connecting beam 105 to each of the cross-beams 102, 107 is such that the connecting beam 105 can only pivot in one plane relative to each of the cross-beams 102, 107. In contrast thereto, the pivotal connections 104 and 109 of connecting rod 106 allow of a greater degree of freedom of movement, so that torques to be transferred via the pivotal arm are passed on via the connecting beam 105. The pivotal arm is also provided with drive shafts for driving the mowing machine from the drawing vehicle, for which purpose it is possible to connect the drive shaft 22 to the ingoing shaft 50 of the mowing machine via a universal joint (not shown), while the drive shaft 22 has its other end connected via a universal joint 113 to the drive shaft 114, which is connected to the outgoing shaft 116 of a gear box 117 via a universal joint 115. In addition, the gear box 117 includes the ingoing shaft 118 which via means (not shown) can be coupled to the power take-off shaft of the drawing vehicle.

The use of the above-described construction achieves that the apparent pivotal point between the drawing vehicle and the pivotal arm to the mowing machine is located at some distance behind the drawing vehicle, which is advantageous when a curve is to be taken during mowing, while furthermore the two universal joints 113, 115 each account for approximately half of the angle between the drawing vehicle and the pivotal arm, so that the drive can also be effected at a comparatively wide angle. It is furthermore achieved that, during pivoting of the pivotal arm relative to the drawing vehicle, the length of the drive shaft 114 hardly need be adapted, in particular so when the centres of the universal joints 113, 115 are approximately located on the mean perpendiculars of the constant sides of the deformable quadrangle 103, 104, 108, 109, i.e. at some distance beyond said quadrangle.

The drive also includes a gear box 117 having an ingoing shaft 118 and an outgoing shaft 116. Said gear box has a transmission ratio of approximately 1.36:1, so that, at a rate of 1,000 revs/min of the power take-off shaft, the rotational speed of the drive shafts 114 and 22 is approximately 735 revs/min. The gear box 117 is bolted to the connecting element 110 by means of bolts 119. When the mowing implement is drawn by a drawing vehicle, the speed of rotation of whose power take-off shaft is 540 revs/min, the gear box 117 can be inverted, i.e. it can be secured in the inverted position to the connecting element 110, so that the outgoing shaft 116 and the ingoing shaft 118 can be interchanged, thus producing a transmission ratio of 0.735:1. When the power take-off shaft rotates at a speed of 540 revs/min, this also results in a rotational speed of approximately 735 revs/min of the drive shafts 114 and 22. In this way, the mowing machine can be adapted in a simple way to the drawing vehicle, while the rotational speed of the drive at the pivotal arm is not changed, which is advantageous for accomplishing an optimum construction.

## Claims

1. A mowing machine including a mobile frame (3), which is couplable by means of a pivotal arm (1) to a drawing vehicle and, during operation, is located behind and sidewards of said vehicle, the pivotal arm being provided with a first section (110, 111) couplable to the vehicle, a second section (100) connected to the mobile frame (3) and drive means (118, 117, 116, 115, 114, 113, 22) for driving the mowing machine (11) from said vehicle, said drive means including universal joints (113, 115), characterized in that the pivotal arm (1) comprises two portions (102, 107), each of which being connected with a respective pivotal arm section, and two mutually diagonal connecting members (105, 106), which by means of pivotable connections (103, 108; 104, 109) are each connected at both ends to said portions (102, 107), a vertical plane through the pivotable connections (108, 109) on the portion (107) connected to the first section (110, 111) being perpendicular to the direction of operative travel, a vertical plane through the pivotable connections (103, 104) on the portion (102) connected to the second section (100) being perpendicular to the length direction of said second section (100) when seen from above and in that each of the universal joints (113, 115) is provided substantially between respective pivotable connections (103, 104 and 108, 109 respectively) of the connecting members (105, 106) to a respective portion (102, 107).

2. A mowing machine as claimed in claim 1, characterized in that the mutually diagonal connecting members (105, 106) have a substantially equal length and in that the pivotable connections (103, 104, 108, 109) are formed by hinges having substantially vertical pins, while the distance between the pivotable connections (108, 109) on the portion (107) connected to the first section (110, 111) of the pivotal arm (1) is equal to the distance between the pivotable connections (103, 104) on the portion (102) connected to the second section (100) of the pivotal arm (1).

3. A mowing element as claimed in claim 1 or 2, characterized in that each of the universal joints (113, 115) is provided near the centre of a connection line between the respective pivotable connections (103, 104 and 108, 109 respectively) of the connecting members (105, 106) to a respective portion (102, 107).

## Patentansprüche

1. Mähmaschine mit einem fahrbaren Rahmen (3), der mittels eines Schwenkarmes (1) an ein Zugfahrzeug anzuschließen und im Betrieb seitlich hinter dem Fahrzeug angeordnet ist, wobei der Schwenkarm einen ersten, an das Fahrzeug anzuschließenden Teil (110, 111), einen zweiten, mit dem fahrbaren Rahmen (3) verbundenen Teil (100) und einen Antrieb (118, 117, 116, 115, 114, 113, 22) zum Antreiben der Mähmaschine durch das Fahrzeug aufweist, und wobei der Antrieb Universalgelenke (113, 115) enthält,
dadurch gekennzeichnet, daß der Schwenkarm (1) zwei Teilstücke (102, 107) aufweist, die jeweils mit einem entsprechenden Teil des Schwenkarmes verbunden sind, sowie zwei einander kreuzende Verbindungsglieder (105, 106), die mittels gelenkiger Verbindungen (103, 108; 104, 109) jeweils an beiden Enden mit den Teilstücken (102, 107) des Schwenkarmes verbunden sind, wobei sich eine vertikale Ebene durch die gelenkigen Verbindungen (108, 109) an dem Teilstück (107) des Schwenkarmes, das mit dem ersten Teil (110, 111) des Schwenkarmes verbunden ist, senkrecht zur Arbeitsrichtung und eine vertikale Ebene durch die gelenkigen Verbindungen (103, 104) an dem Teilstück (102) des Schwenkarmes, das mit dem zweiten Teil (100) des Schwenkarmes verbunden ist, in Draufsicht senkrecht zur Längsrichtung des zweiten Teiles (100) des Schwenkarmes erstreckt, und daß jedes Universalgelenk (113, 115) im wesentlichen zwischen entsprechenden gelenkigen Verbindungen (103, 104 bzw. 108, 109) der Verbindungsglieder (105, 106) zu einem zugehörigen Teilstück (102, 107) des Schwenkarmes angeordnet ist.

2. Mähmaschine nach Anspruch 1,
dadurch gekennzeichnet, daß die einander kreuzenden Verbindungsglieder (105, 106) im wesentlichen gleich lang sind, und daß die gelenkigen Verbindungen (103, 104, 108, 109) durch Gelenke mit im wesentlichen vertikalen Stiften gebildet sind, wobei der Abstand zwischen den gelenkigen Verbindungen (108, 109) an dem mit dem ersten Teil (110, 111) des Schwenkarmes (1) verbundenen Teilstück (107) des Schwenkarmes gleich dem Abstand zwischen den gelenkigen Verbindungen (103, 104) an dem mit dem zweiten Teil (100) des Schwenkarmes (1) verbundenen Teilstück (102) des Schwenkarmes ist.

3. Mähmaschine nach Anspruch 1 oder 2,
dadurch gekennzeichnet, daß jedes Universalgelenk (113, 115) nahe der Mitte einer Verbindungsgeraden zwischen den jeweiligen gelenkigen Verbindungen (103, 104 bzw. 108, 109) der Verbindungsglieder (105, 106) mit einem zugehörigen Teilstück (102, 107) des Schwenkarmes angeordnet ist.

## Revendications

1. Machine faucheuse comprenant un châssis mobile (3) pouvant être couplé au moyen d'un bras pivotant (1) à un véhicule tracteur et étant situé, pendant le travail, derrière le véhicule et latéralement à celui-ci, le bras pivotant étant muni d'une première section (110, 111) pouvant être couplée au véhicule, d'une deuxième section (100) reliée au châssis mobile (3) et de moyens d'entraînement (118, 117, 116, 115, 114, 113, 22) pour entraîner la machine faucheuse (11) à partir dudit véhicule, lesdits moyens d'entraînement comprenant des joints universels (113, 115),
**caractérisée** en ce que le bras pivotant (1) comprend deux parties (102, 107) qui sont chacune reliée à une section respective du bras pivotant, et deux organes de liaison (105, 106) disposés en diagonale l'un par rapport à l'autre, qui sont chacun relié sur ses deux extrémités auxdites parties (102, 107) au moyen de liaisons pivotantes (103, 108; 104, 109), un plan vertical passant par les liaisons pivotantes (108, 109) sur la partie (107) reliée à la première section (110, 111) étant perpendiculaire au sens de marche du travail, un plan vertical passant par les liaisons pivotantes (103, 104) sur la partie (102) reliée à la deuxième section (100) étant perpendiculaire au sens longitudinal de ladite deuxième section (100), en étant vu de dessus, et en ce que chacun des joints universels (113, 115) est prévu substantiellement entre les liaisons pivotantes respectives (103, 104 et 108, 109, respectivement) des organes de liaison (105, 106) avec une partie (102, 107) respective.

2. Machine faucheuse selon la revendication 1, caractérisée en ce que les organes de liaison (105, 106) disposés mutuellement en diagonale sont sensiblement de même longueur, et en ce que les liaisons pivotantes (103, 104, 108, 109) sont constituées par des articulations ayant des pivots sensiblement verticaux, tandis que la distance entre les liaisons pivotantes (108, 109) sur la partie (107) reliée à la première section (110, 111) du bras pivotant (1) est égale à la distance entre les liaisons pivotantes (103, 104) sur la partie (102) reliée à la deuxième section (100) du bras pivotant (1).

3. Elément faucheur selon la revendication 1 ou 2, caractérisé en ce que chacun des joints universels (113, 115) est prévu près du centre d'une ligne joignant les liaisons pivotantes respectives (103, 104 et 108, 109, respectivement) des organes de liaison (105, 106) avec un partie respective (102, 107).
